(19) Europäisches Patentamt
European Patent Office
Office européen des brevets

(11) **EP 3 375 082 B1**

(12) **EUROPEAN PATENT SPECIFICATION**

(45) Date of publication and mention of the grant of the patent:
**01.07.2020 Bulletin 2020/27**

(21) Application number: **15793827.5**

(22) Date of filing: **11.11.2015**

(51) Int Cl.:
*H02M 1/32* *(2007.01)*     *H02M 7/483* *(2007.01)*

(86) International application number:
**PCT/EP2015/076363**

(87) International publication number:
**WO 2017/080597 (18.05.2017 Gazette 2017/20)**

(54) **A MODULAR MULTILEVEL CONVERTER FOR HANDLING AC SIDE FAULTS**

MODULARER MEHRPEGELUMRICHTER ZUR BEHANDLUNG VON WECHSELSTROMSEITIGEN FEHLERN

CONVERTISSEUR MODULAIRE MULTINIVEAUX POUR GESTION DE DÉFAUTS CÔTÉ CA

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**19.09.2018 Bulletin 2018/38**

(73) Proprietor: **ABB Schweiz AG**
**5400 Baden (CH)**

(72) Inventors:
• **ANDERSSON, Axel**
**771 41 Ludvika (SE)**
• **FADZEYEU, Kanstantsin**
**S-771 43 Ludvika (SE)**
• **JIANG-HÄFNER, Ying**
**S-771 42 Ludvika (SE)**

(74) Representative: **Kransell & Wennborg KB**
**P.O. Box 27834**
**115 93 Stockholm (SE)**

(56) References cited:
**EP-A1- 2 858 227     WO-A1-2013/000513**

**Description**

FIELD OF INVENTION

The present invention generally relates to multilevel converters. More particularly the present invention relates to a modular multilevel converter as well as to a method and computer program product for controlling fault handling in a modular multilevel converter.

BACKGROUND

Modular multilevel converters are of interest to use in a number of different power transmission environments. They may for instance be used as voltage source converters in direct current power transmission systems such as high voltage direct current (HVDC) and alternating current power transmission systems, such as flexible alternating current transmission system (FACTS).

The modular multilevel converter comprises a number of cascaded converter submodules or cells, each comprising a number of switches and an energy storage unit, often in the form of a DC capacitor.

Converter submodules or cells in such a converter may for instance be of the half-bridge, full-bridge or clamped double cell type. These may be connected in upper and lower phase arms of a phase leg.

The use of full-bridge cells is attractive in some applications. Series connection of full-bridge cells offers three levels of voltage control as well as DC fault voltage blocking capability by imposing a reverse voltage.

A full-bridge cell is thus advantageous when for instance DC fault currents are to be limited.

However, there exist some other fault cases, notably AC side faults such as phase-to ground faults, when the use of a full-bridge cell leads to the need for an oversizing and a consequentially unnecessarily big converter.

WO 2015/110185 is directed towards handling such a situation. In this document the oversizing is avoided through either providing a highly asymmetrical converter where an upper phase arm comprises full-bridge cells and a lower phase arm half-bridge cells or the full-bridge cells are equipped with bypass switches operated to bypass the energy storage element in case of a phase-to-ground fault.

There are situations where a symmetrical full-bridge design is desired in a phase leg. There are thus situations where an asymmetrical converter design is not an option. It would in this situation be of interest to avoid a converter oversizing without the need for adding extra components such as a bypass switch.

Furthermore if a temporary block of the cells is made in this converter extremely high AC side voltages may occur, which voltages may reach twice the total phase arm voltage.

The invention is provided for addressing at least some of the above-mentioned issues.

The documents EP 2 858 227 A1 and WO 2013/000513 A1 disclose further protective arrangements for modular multilevel converters.

SUMMARY OF THE INVENTION

The present invention provides a modular multilevel converter comprising a protective control mode according to claim 1, a method of fault handling in a modular multilevel converter according to claim 11 and a computer program product for controlling fault handling in a modular multilevel converter according to claim 18. Preferred embodiments are defined in the dependent claims.

The present invention is directed towards providing a reduction of the converter voltage rating required for a phase arm in order to handle AC side faults that at the same time can address other problems caused by AC side faults.

This object is according to a first aspect achieved through a modular multilevel converter configured to convert between alternating current (AC) and direct current (DC) and comprising
a first and a second DC terminal,
a number of AC terminals for connection to a number of AC phases of an AC link, and
a number of phase legs, one for each phase,
where each phase leg is connected between the first and second DC terminals, has a midpoint connected to a corresponding AC terminal and comprises cells having a bipolar voltage contribution capability, where each cell comprises at least one energy storage element for providing the voltage contribution and cell switches for controlling the voltage contribution, where at least the first DC terminal is connectable to a DC system.

The modular multilevel converter further comprising a control unit configured to enter a first protective control mode upon the detection of an operational disturbance of the converter, the first protective control mode comprising controlling all the bipolar voltage contribution cells to operate as unipolar voltage contribution cells, and
if the operational disturbance is identified as a fault on a phase of the AC link, blocking the cells of the phase leg connected to the phase for the remainder of the first protective control mode and controlling the cells of the phase legs connected to the healthy phases of the AC link to handle effects of the fault.

This object is according to a second aspect achieved through a method of controlling fault handling in a modular multilevel converter converting between alternating current (AC) and direct current (DC), the converter comprising a first and a second DC terminal, a number of AC terminals, each connected to a corresponding AC phase of an AC link, and a number of phase legs, one for each phase of the AC link, where each phase leg is connected between the first and second DC terminals, has a midpoint connected to a corresponding AC terminal and comprises cells having a bipolar voltage contribution capability, where each cell comprises at least one energy storage element for providing the voltage contribution and cell switches for controlling the voltage contribution, the method being performed in a control unit of the converter and comprising

entering a first protective control mode upon the detection of an operational disturbance of the converter, the first protective control mode comprising controlling all the bipolar voltage contribution cells to operate as unipolar voltage contribution cells, and upon the operational disturbance being identified as caused by a fault on a phase of the AC link further performing for the remainder of the first protective control mode:

blocking the cells of the phase leg connected to said faulty phase, and
controlling the cells of the phase legs connected to the healthy phases of the AC link to handle effects of the fault.

The object is according to a third aspect achieved through a computer program product for controlling fault handling in a modular multilevel converter converting between alternating current (AC) and direct current (DC), the converter comprising a first and a second DC terminal, a number of AC terminals, each connected to a corresponding AC phase of an AC link and a number of phase legs, one for each phase of the AC link, where each phase leg is connected between the first and second DC terminals, has a midpoint connected to a corresponding AC terminal and comprises cells having a bipolar voltage contribution capability, where each cell comprises at least one energy storage element for providing the voltage contribution and cell switches for controlling the voltage contribution, the computer program product being provided on a data carrier comprising computer program code configured to cause a control unit for the modular multilevel converter to, when the computer program code is loaded into the control unit

enter a first protective control mode upon the detection of an operational disturbance of the converter, the first protective control mode comprising controlling all the bipolar voltage contribution cells to operate as unipolar voltage contribution cells, and

if the operational disturbance is identified as caused by a fault on a phase of the AC link further perform for the remainder of the first protective control mode:
blocking the cells in the phase leg connected to said faulty phase, and controlling the cells of the phase legs connected to the healthy phases of the AC link to handle effects of the fault.

The invention has a number of advantages. It solves the problem of excessive DC voltage rating without having to add additional components to the cells. This is combined with addressing of other consequences of AC link faults. The invention allows such diverse objectives to be achieved such as limiting of temporary AC overvoltage or AC overcurrent, avoidance of transients during circuit breaker opening, reducing of the experiencing of high cell voltages during the blocking of cells connected to a faulty phase and avoiding of temporary converter blocking due to overcurrent protection.

BRIEF DESCRIPTION OF THE DRAWINGS

The present invention will in the following be described with reference being made to the accompanying drawings, where

fig. 1 schematically shows a converter station where a modular multilevel converter is connected between a DC and an AC system via an AC link,
fig. 2 schematically shows the structure of the modular multilevel converter,
fig. 3 schematically shows a full-bridge cell,
fig. 4 shows a block schematic of a control unit of the modular multilevel converter,
fig. 5 shows a block schematic of a fault handling element in the control unit,
fig. 6 shows a phase leg of the modular multilevel converter when the full-bridge cells have been set to operate as half-bridge cells,
fig. 7 shows a flow chart of a number of method steps performed in a method for controlling fault handling in the modular multilevel converter,
fig. 8 schematically shows a number of further steps performed during handling of effects of a phase fault, and
fig. 9 schematically shows a computer program product comprising a data carrier with computer program code for implementing functionality in the control unit.

DETAILED DESCRIPTION OF THE INVENTION

In the following, a detailed description of preferred embodiments of the invention will be given.

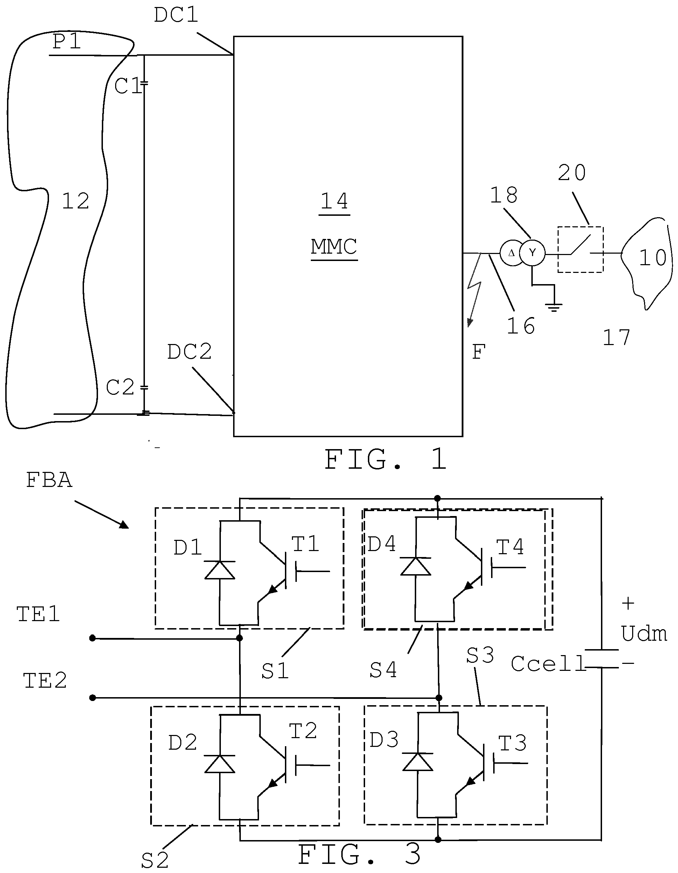

Fig. 1 schematically shows a single line diagram of an environment in which a modular multilevel converter (MMC) 14 may be provided. The converter may more particularly be provided in a converter station that is connected between an Alternating Current (AC) system 10 and a Direct Current (DC) system 12. The DC system 12 may as an example be a DC power transmission system such as a High Voltage Direct Current (HVDC) power transmission system. The AC system 10 may be a three-phase AC transmission system. The DC system 12 in turn includes a pole P1 coupled to the AC system 10 via the converter station. In this embodiment the DC system 12 is an asymmetrical monopole system. It should however be realized that the system may also be a bipole system made up to two asymmetrical monopole systems. Therefore there is also a ground potential which may or may not be provided as a neutral conductor in the DC system 12.

In order to enable the DC system 12 to be connected to the AC system 10, the converter station includes the converter 14 for conversion between AC and DC. The converter 14 may function as a rectifier and/ or inverter. The converter 14 may be a voltage source converter and in this embodiment it is a cell-based multilevel voltage source converter or a modular multilevel converter. The converter has a first DC terminal DC1 for connection to a first pole PI of the DC system 12 and a second DC terminal DC2 for connection to a neutral bus, which neutral bus may further be connected to ground via an electrode line or a metallic earth return line. In fig. 1 the second DC terminal DC2 is connected to ground, and is therefore in this example a neutral connection terminal. The converter also comprises a number of AC terminals, one for each phase. These AC terminals have been omitted from fig. 1 since the diagram is a single line diagram.

The converter station may also comprise a pair of DC capacitors C1 and C2 connected between the pole PI and ground.

The converter 14 thus has a DC side for connection to the DC system 12 and more particularly to at least one pole PI of the DC system and an AC side for being coupled to the AC system 10.

As can also be seen in fig. 1, the converter station 14 may also include a transformer 18 having a primary side for being coupled to the AC system 10 and a secondary side coupled to the AC side of the converter 14. In this first embodiment the secondary side is more particularly connected to the converter 14 via an AC bus or AC link 16. A fault F is also shown as occurring on the AC link 16.

In the present example the link 16 and AC system 10 are provided for transmission of three phase AC power. For this reason the primary side of the transformer 18 includes three primary windings (not shown), which in this first embodiment are connected in a wye configuration. It should however be realized that it is also possible with a delta configuration. The primary side here furthermore has a neutral point, which may be directly or indirectly connected to ground. The primary side is furthermore connected to the AC system 10 via a circuit breaker 20. As the AC system 10 is a three-phase system the circuit breaker 20 typically comprises three circuit breaking elements, one for each phase. The circuit breaker 20 is more particularly serially connected between the primary side of the transformer 18 and the AC system 10.

The secondary side of the transformer 18 also comprises three secondary windings (not shown) connected in a delta configuration. It should however be realized that it is also possible with a wye configuration. The secondary windings may thus be connected either in delta or in wye configuration.

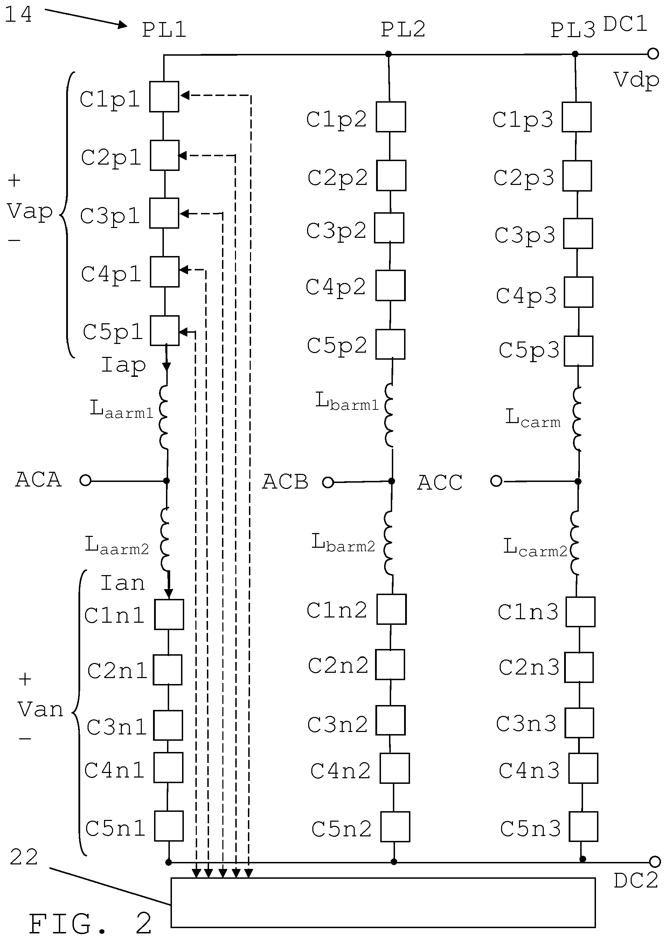

Fig. 2 schematically shows one variation of the multilevel converter 14 in the form of a cell based voltage source converter 14. The converter operates to convert between alternating current (AC) and direct current (DC).

The converter 14 in fig. 2 comprises a three-phase bridge made up of a number of phase legs. There are in this case three phase legs. There is thus a first phase leg PL1, a second phase leg PL2 and a third phase leg PL3. The phase legs are more particularly connected between the first DC terminal DC1 and the second DC terminal DC2, where the mid points of the phase legs are connected to corresponding alternating current terminals ACA, ACB, ACC. A phase leg is in this example divided into two halves, a first upper half and a second lower half, where such a half is also termed a phase arm.

The first DC pole furthermore has a first potential Vdp that may be positive. As the first DC terminal DC1 is connected to the first pole, this potential is also shown in fig. 2. The first pole may because of this also be termed a positive pole. A phase arm between the first DC terminal DC1 and an AC terminal ACA, ACB and ACC may be termed a first phase arm or an upper phase arm, while a phase arm between the AC terminal and the second DC terminal DC2 may be termed a second phase arm or a lower phase arm. As the second DC terminal DC2 is connected to ground, also this potential GND is indicated in fig. 2.

The voltage source converter 14 depicted in fig. 2 is connected to an asymmetric monopole DC system. It is thus connected between a pole and ground. As an alternative it may be connected to a symmetric bipole DC system. In a symmetric bipole DC system there would be a second pole P2 having a second negative potential that may be as large as the first potential but with the opposite polarity. In order to be connected to a bipole system, the converter would furthermore need to comprise a third and a fourth phase arm in the phase leg, where the second and third phase arms would be connected to ground, the first phase arm connected between the positive voltage and the second phase arm and the fourth phase arm connected between the negative voltage of the second pole P2 and the third phase arm. A first AC terminal of a phase leg would when connected to a symmetric bipole system be provided between the first and second phase arms, while a second AC terminal of the same phase leg would be provided between the third and fourth phase arms. The phase arms would furthermore be connected to the AC terminals via phase reactors.

The phase arms of the voltage source converter 10 in the example in fig. 2 comprise cells. A cell is a unit that may be switched for providing a voltage contribution to the voltage on the corresponding AC terminal. A cell then comprises one or more energy storage elements for this voltage contribution, which energy storage elements may for instance be in the form of capacitors. The cell may be switched to provide a voltage contribution corresponding to the voltage of the energy storage element or a zero voltage contribution. The cell thus comprises switches that control the voltage contribution from the energy storage element. Furthermore, at least some of the cells have bipolar voltage contribution capabilities.

This means that the voltage contribution from a cell, such as a full-bridge cell, may have two different polarities.

The cells are with advantage connected in series or in cascade in a phase arm.

In the example given in fig. 2 there are five series-connected or cascaded cells in each phase arm. Thus the upper phase arm of the first phase leg PL1 includes five cells C1p1, C2p1, C3p1, C4p1 and C5p1, while the lower phase arm of the first phase leg PL1 includes five cells C1n1, C2n1, C3n1, C4n1 and C5n1. Across the cells of the upper phase arm there is a first phase arm voltage Vap and through the upper phase arm there runs a first phase arm current Iap. As the upper phase arm is connected to the first pole PI it may also be considered to be a positive phase arm. Across the cells of the lower phase arm there is a second phase arm voltage Van and through the lower phase arm there runs a second phase arm current Ian. The upper phase arm is furthermore joined to the AC terminal ACA via a first or upper arm reactor Laarm 1, while the lower phase arm is joined to the same AC terminal ACA via a second or lower arm reactor Laarm2. In a similar fashion the upper phase arm of the second phase leg PL2 includes five cells C1p2, C2p2, C3p2, C4p2 and C5p2 while the lower phase arm of the second phase leg PL2 includes five cells C1n2, C2n2, C3n2, C4n2 and C5n2. Finally the upper phase arm of the third phase leg PL3 includes five cells C1p3, C2p3, C3p3, C4p3 and C5p3 while the lower phase arm of the third phase leg PL3 includes five cells C1n3, C2n3, C3n3, C4n3 and C5n3. The upper phase arms are furthermore joined to the corresponding AC terminals ACB and ACC via corresponding first or upper arm reactors Lbarm1 and Lcarm1, respectively, while the lower phase arms are joined to the same AC terminal ACB and ACC via corresponding second or lower arm reactors Lbarm2 and Lcarm2, respectively.

The number of cells provided in fig. 2 is only an example. It therefore has to be stressed that the number of cells in a phase arm may vary. It is often favorable to have many more cells in each phase arm, especially in HVDC applications. A phase arm may for instance comprise hundreds of cells. There may however also be fewer.

Control of each cell in a phase arm is normally done through providing the cell with a control signal directed towards controlling the contribution of that cell to meeting a reference voltage. The reference voltage may be provided for obtaining a waveform on the AC terminal of a phase leg, for instance a sine wave. In order to control the cells there is therefore a control unit 22.

The control unit 22 is provided for controlling all the phase arms of the converter. However, in order to simplify the figure only the control of the upper phase arm of the first phase leg PL is indicated in fig. 2.

The other phase arms are controlled in a similar manner in order to form output waveforms on the three AC terminals AC1, AC2 and AC3.

The control unit 22 may furthermore be used for some dedicated control with regard to handling of various faults, such as AC phase faults. This will be described in more detail later.

The converter 14 comprises full-bridge cells, i.e. cells with bipolar voltage contribution capability. Fig. 3 shows a full-bridge cell FBA may be used in the converter.

The cell FBA is thus a full-bridge converter cell and includes an energy storage element, here in the form of a capacitor Ccell, which is connected in parallel with a first string of switches S1 and S2. The energy storage element Ccell provides a voltage Udm, and therefore has a positive and negative end, where the positive end has a higher potential than the negative end. The switches S1 and S2 in the first string are connected in series with each other, where each switch may be realized in the form of a switching element that may be an IGBT (Insulated Gate Bipolar Transistor) transistor together with an anti-parallel unidirectional conducting element. In fig. 3 the first switch S1 has a first transistor T1 with a first anti-parallel diode D1. The first diode D1 is connected between the emitter and collector of the transistor T1 and has a direction of conductivity from the emitter to the collector as well as towards the positive end of the energy storage element Ccell. The second switch S2 has a second transistor T2 with a second anti-parallel diode D2. The second diode D2 is connected in the same way in relation to the energy storage element C as the first diode D1, i.e. conducts current towards the positive end of the energy storage element Ccell. The first switch S1 is furthermore connected to the positive end of the energy storage element Ccell, while the second switch S2 is connected to the negative end of the energy storage element C.

There is also a second string of series-connected switches S3 and S4. The second string of switches is here connected in parallel with the first string as well as with the energy storage element Ccell. The second string includes a third switch S3, here provided through a third transistor T3 with anti-parallel third diode D3 and a fourth switch S4, here provided through a fourth transistor T4 with anti-parallel fourth diode D4. The fourth switch S4 is furthermore connected to the positive end of the energy storage element Ccell, while the third switch S3 is connected to the negative end of the energy storage element Ccell. Both the diodes D3 and D4 furthermore have a direction of current conduction towards the positive end of the energy storage element Ccell. The switches S3 and S4 in the second string are thus connected in series with each other. The switches are here also denoted cell switches. The switching elements may be implemented using Insulated Gate Bipolar Transistors (IGBTs). However, they may also be Bi-mode Insulated Gate Transistors (BiGTs) or other types of switching components.

This full-bridge cell FBA comprises a first cell connection terminal TE1 and a second cell connection terminal TE2, each providing a connection for the cell to a phase arm of a phase leg of the voltage source converter. In this full-bridge cell the first cell connection terminal TE1 more particularly provides a connection from the phase arm to the junction between the first and the second switches S1 and S2, while the second cell connection terminal TE2 provides a connection between the phase arm and a connection point between the third and fourth switches S3 and S4. The junction between the first and second switches S1 and S2 thus provides one cell connection terminal TE1, while the junction between the third and fourth switches S3 and S4 provides a second cell connection terminal TE2. These cell connection terminals TE1 and TE2 thus provide points where the cell FBA can be connected to a phase arm of a phase leg. The first cell connection terminal TE1 thereby joins the phase arm with the connection point or junction between two of the series-connected switches of the first string, here the first and second switches S1 and S2, while the second cell connection terminal TE2 joins the upper phase arm with a connection point between two of the series connected switches of the second string, here between the third and fourth switches S3 and S4.

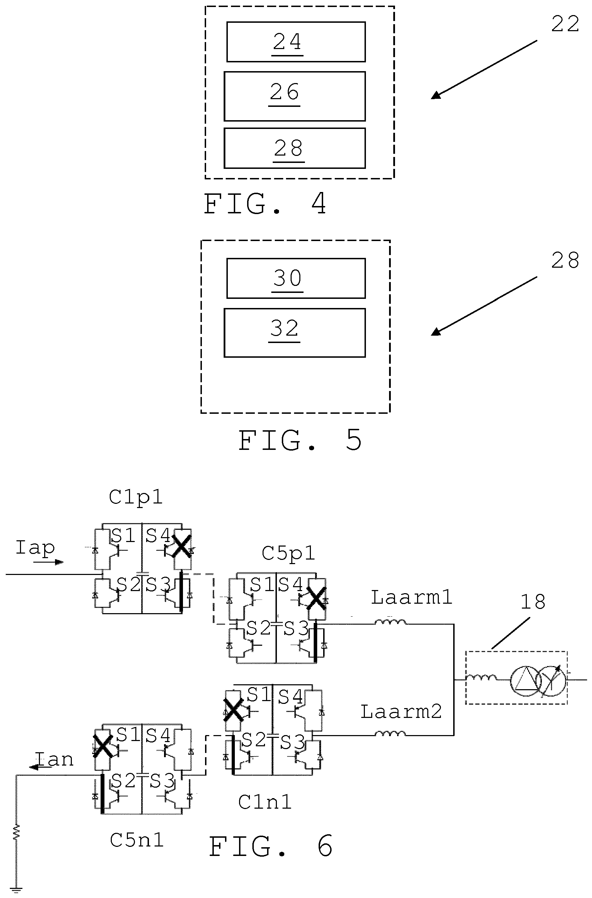

As can be seen in fig. 4, the control unit 22 may comprise a conversion control element 24 for providing regular control where an AC voltage waveform is formed, an operations disturbance detecting element 26 and a fault handling element 28. The conversion control element 24 more particularly uses at least one AC voltage reference for each phase leg in order to form steady-state phase voltages. These AC voltage references are typically used in Pulse Width Modulation (PWM) control of the phase legs.

Fig. 5 shows a block schematic of the fault handling element 28. It comprises a fault mode monitoring block 30 and a number of fault mode handling blocks, of which only one; a first fault mode handling block 32 is shown. This block 32 is provided for handling a first protective control mode. The control unit 22 is with advantage implemented using a computer with computer program code comprising computer program instructions providing the above-mentioned elements. However, it may also be implemented using dedicated hardware circuits such as Field-Programmable Gate Array (FPGA) and Application Specific Integrated Circuit (ASIC).

One problem that may exist in multilevel converters that employ full-bridge cells is that the voltage rating of the converter needs to be high in order to handle AC phase faults.

If the full-bridge cells are blocked, i.e. the transistor turn-on being disabled, there will be created a series connection of cell capacitors in each phase arm, which cell capacitor series connection is caused by the anti-parallel freewheeling diodes. The blocking is beneficial if there are DC side faults, such as pole-to-ground faults, because then the series-connected cell capacitors act to limit the fault current.

The situation is not as beneficial in the case of a fault on one or more of the phases such as a phase to ground fault.

In case of a ground fault F on one of the phases, this fault grounds the midpoint of the corresponding phase leg. The two other phase leg midpoints may then be seen as connected to corresponding AC voltage sources via source impedances, which are typically transformers. These voltages have, because of the transformer, been raised with a value of $\sqrt{3}$ as compared with before the fault.

If the voltage across a DC capacitor C1 or C2 is Ud, this means that the peak voltage of the healthy phases after the converter transformer becomes ± 1.732 Ud. At the negative peak of VAC = -1.732 Ud, this will charge the upper arm full-bridge capacitors from Ud to 1.732 Ud or to 1.73 per unit (p.u.). This is a significant driving source for freewheel diode current. As a consequence the cell voltage can be charged to very high voltage even during very short transients.

This situation would typically have to be handled through redundancy, i.e. through increasing the number of cells, using additional cells that are only used for voltage rating purposes, which often leads to more than 30% cost increases.

According to aspects of the invention, the first situation is handled through entering a first protective control mode where the full-bridge cells of one or more of the phase legs are set to operate as half-bridge cells. The bipolar voltage contribution cells are thus controlled to operate as unipolar voltage contribution cells. This may more particularly involve controlling the switches of one cell string, for instance the first, to achieve the unipolar voltage contribution operation, while allowing the switches of the other cell string, for instance the second, to be controlled using an AC voltage reference.

Fig. 6 schematically shows one phase leg where this has been taken place. In fig. 6, only the first and fifth cell C1p1, C5p 1, C1n1 and C5n1 of the upper and lower phase arms of the first phase leg are shown. However, the same type of operation has been implemented in all the cells. As can be seen in fig. 6, the fourth switches S4 are set to be open and the third switches S3 set to be conducting in the upper phase arm, while the first switches S1 are set to being open and the second switches S2 as being conducting or closed in the lower phase arm. This makes the full-bridge cells act as half-bridge cells.. The half-bridge cell may be controlled in various ways to mitigate the consequences of a phase-to ground fault. This will shortly be described.

It may here be mentioned that there are other ways in which half-bridge operation may be obtained. It is for instance possible that the first switch S1 in the upper phase arm is kept closed, while the corresponding second switch S2 is kept open. In a similar manner it is possible that the fourth switch S4 in the lower phase arm is kept closed with the corresponding third switch S3 kept open.

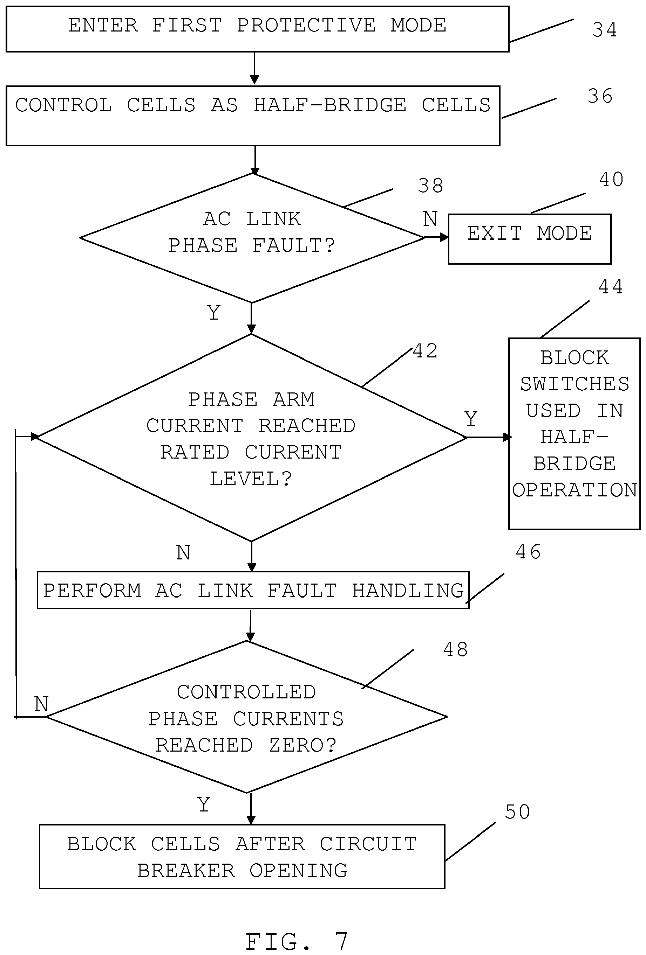

Now an example of a method of controlling fault handling being performed by the control unit 22 will be described with reference being made also to fig. 7, which shows a flow chart of a number of method steps in a method of controlling fault handling.

As the converter 14 is operating in steady state the operations disturbance detecting element 26 may detect that there is an operations disturbance. The detection of the disturbance may be a detection of a fault on the AC link. It may also be a general fault detection, such as an overcurrent fault detection in a phase arm, or in the DC link.

The operations disturbance detecting element 26 may provide the fault handling element 28 with an indication of the detection. As an alternative it is possible that the operational disturbance may be detected outside of the control unit 22, for instance through an overcurrent detecting unit provided in the DC system 12. In this case this external operations disturbance detecting unit may inform the fault handling element 28 of the disturbance. In this case it is also possible to omit the disturbance detecting element 26 from the control unit 22.

The fault handling element 28 thereby receives the indication. Furthermore, the block in the fault handling element that receives the indication is the fault handling mode monitoring block 30, which in turn enters a first protective control mode through instructing the first fault handling mode block 32 to start to operate, which block 32 is responsible for the protection activities being performed in the first protection control mode. The fault handling element 28 therefore enters the first protective control mode, step 34. The fault handling mode monitoring block 30 may more particularly make the first mode handling block 32 handle the first protective control mode. The first mode handling block 32 may in this first fault handling mode more particularly control all the cells of the converter 14 to operate as half-bridge cells, step 36. It may thus provide the cells with control signals implementing the connection state indicated in fig. 6..

The first mode handling block 32 may thus according to the example in fig. 6, control the fourth switch S4 of all cells in the upper phase arms to be open and the third switch S3 of all cells in the upper phase arm to be closed, the first switch S1 of all cells in the lower phase arms to be open and the second switch S2 of all cells in the lower phase arm to be closed.

The first mode handling block 32 of the fault handling element 28 then investigates if the operational disturbance was due to an AC link fault, such as a phase-to-ground fault of one of the AC link phases. It is here possible that the converter station is equipped with phase fault detecting units, which may be set to send phase fault indications to the first fault mode handling block. Such a phase fault detecting unit may detect the voltage levels on the phases of the AC link, for instance using measurement transformers and thereby detect if any such phase is grounded. In a preferred variation such a phase fault detecting unit may be a unit set to determine a differential current based on current levels determined at two different locations in relation to a phase, such as a current detected at an AC terminal, in a phase arm or at the secondary side of the transformer 18. This phase fault detecting unit may more particularly determine that there is a fault on a phase based on the magnitude of the differential current determined for a phase. An indication of such a fault may be sent from such a phase fault detecting unit to the first fault mode handling block 32 or to the fault monitoring block 30 of the fault handling element 26 either on its own initiate or after being queried by the first fault mode handling block 32 or the fault mode monitoring block 30. Alternatively it is possible that the fault operations disturbance detecting element 26 determines that there is an AC link fault F.

In case the fault is not a phase fault, step 38, then the first protective control mode is exited, step 40. The fault monitoring block 30 may in this case inform the first fault mode handling block 32 to stop operation. The fault monitoring block 30 may also have received an indication from some other fault detecting unit of a fault and then connect to another fault handling block responsible for handling another protective control mode corresponding to this other fault. The first protective control mode may also be exited if no indication is received within a time-out period.

However, if an AC link fault is confirmed, step 36, i.e. if the operational disturbance is identified as a fault on a phase of the AC link 16, then the first fault mode handling block 32 continues and investigates if any current through cells of a phase leg has reached a rated current level. This investigation is furthermore made as long as

When the first protective control mode is entered the phase arm current in a phase arm may exceed a first current protection level. The first mode handling block may for instance monitor phase arm currents Iap or Ian where at least one of the phase arm currents may exceed the first current protection level upon the entering of the first protective control mode, which first level is a level that is higher than the maximum operational current level of a cell during steady-state operation but lower than the rated current level of the cell, The rated current level is here also termed a second current protection level. The second current protection level is a level at which cell switches have to be blocked for protective purposes.

The investigation of if the rated current level has been reached may be performed through querying the disturbance detecting element 26 or disturbance detecting unit about if it detects an overcurrent that exceeds the second higher current level. As an alternative it is possible that the disturbance detecting element 26 or disturbance detecting unit informs the first mode handling block 32 that the second level has been reached. If the second level has been reached, i..e the rated current level, step 42, then the fault handling element 28 blocks all the cells of the converter that were used in half-bridge cell operation, step 44. This means that the control signals for the cell switches that were used in half-bridge cell operation are disabled, while the switches that were switched for obtaining half-bridge cell operation retain their switching states. This means that in the example of fig. 6, the first and second switches S1 and S2 in the upper phase arm are being blocked, while the fourth and third switches S4 and S3 retain their states, i.e. remain open and closed, respectively. This also means that the third and fourth switches S3 and S4 of the lower phase arms are blocked, while the first and second switches S1 and S2 retain their states. The third and fourth switches S3 and S4 are thus blocked, while the first and second switches S1 and S2 remain open and closed, respectively.

In case the second current level is not reached, step 42, then the first fault mode handling block 32 continues and performs AC link fault handling, step 46.

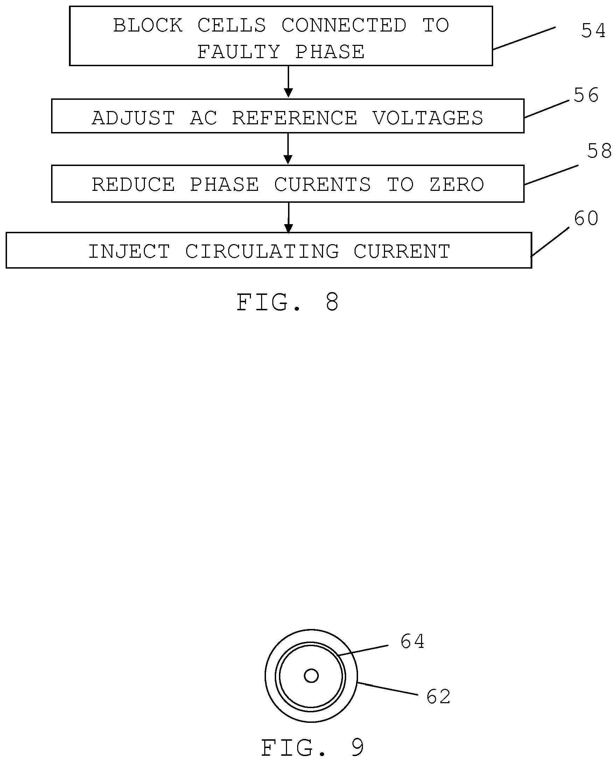

The AC link fault handling being performed by the first fault mode handling block 32 is shown in more detail in a flow chart in fig. 8.

The first fault more handling block 32 first blocks the cells of the phase leg connected to the faulty phase, step 54. This means that all the switches in this phase leg are being permanently turned off.

The first fault mode handling block 32 then continues and controls the cells of the phase legs connected to the healthy phases to handle effects of the fault. They may more particularly be controlled to limit the consequences of the fault in the faulty phase. This means that the full-bridge cells operating as half-bridge cells of the phase legs connected to the healthy phases are controlled. As can be seen a number of different activities may be carried out.

One type of control being performed is the adjusting of the AC reference voltages assigned to the phase legs. The AC reference voltage may more particularly be increased. The adjustment may be an adjustment required for keeping the phase arm current below the above-mentioned second current protection level.

In one variation, a zero sequence signal corresponding to an inverted phase voltage is created and then added to the reference signals used for the healthy phases. The adjustment may more particularly be supplied from the first fault mode handling block 32 to the conversion control element 24 for use on the cells of the phase legs connected to these healthy phases.

The adjustment value may in fact be sent for use in all phase legs. This means that the conversion control element 24 may try to control the cells of the phase leg connected to the faulty phase also with an adjusted reference value. However, since the cells of the phase leg are blocked, the control will not result in any voltage generation.

The first fault mode handling block 32 also acts to limit the phase currents of the healthy phases, step 58. The phase current, which in steady state operation is related to active and reactive power, is typically determined based on the detected phase arm currents and the phase leg controlled to gradually reduce this current down to zero. The control may be implemented using proportional (P), proportional and integrating (PI) or proportional, integrating and derivative (PID) control.

Finally AC link fault handling comprises controlling the cells of the phase legs connected to the healthy phases to inject a circulating current, step 60, which means that the cells of a phase leg connected to one healthy phase are set to inject a first current and the cells of another phase leg connected to the other healthy phase are set to inject the same phase current but with an opposite polarity or delayed by 180 degrees. The other phase leg thus injects the inverted phase current and thereby a circulating current is obtained. This circulating current may then have a pre-set or pre-defined frequency and amplitude. The frequency may be higher than the steady-state operational frequency, for instance twice as high, and the amplitude may be 0.3 p.u. The amplitude may also be slowly reduced to zero. The amplitude may thus be decreased over time.

When the currents of the healthy phases have been reduced to zero, it is possible to open the circuit breaker 20.

Therefore the first fault mode handling block investigates if the controlled phase currents, i.e. the currents of the healthy phases, have been reduced to zero. If they have not, step48, then the first fault handling element returns and investigates if the second current level has been reached, step 42, and performs AC link fault handling, step 46 and again investigates if the controlled phase currents have reached zero. It can thereby be seen that the blocking and controlling being performed in respect of the healthy phase legs is continued as long as the second current protection level is not exceeded.

However, if the currents of the healthy phases have been reduced to zero, step 48, then the circuit breaker 20 may be opened.

After the circuit breaker has opened, which the fault handling element 28 may be notified of through the circuit breaker 20 being configured to report its state or at least its state changes to the mode monitoring block 30, the first fault mode handling block 32 may block all cells of the converter, step 50, whereupon the mode monitoring block 30 may stop operation of the first fault mode handling block 32.

After the circuit breaker has been opened, the cells blocked and the cell capacitors discharged, it is then possible to service the converter.

It can be seen that the invention has a number of advantages. It solves the problem of excessive arm voltages without having to add additional components to the cells. This is combined with addressing of other consequences of AC link faults. Through the adjusting of the AC voltage references, the temporary AC overvoltage or AC overcurrent can be addressed. Through the current control significant transients are avoided during the opening of the circuit breaker. Both the circulating current and the AC voltage reference adjustment aid in lowering the high voltages experienced by the cells in the phase leg connected to the healthy phases. This also helps in avoiding a temporary blocking of the converter due to overcurrent protection. The cell voltage can also be under control due to switching and circulating current since energy can be moved between the healthy phases and arms as well as between the upper and lower arms of phase legs.

The control unit may, as was previously mentioned, be provided in the form of one or more processors together with computer program memory including computer program code for performing its functions. This computer program code may also be provided on one or more data carriers which perform the functionality of the control unit when the program code is being loaded into a computer acting as control unit. One such data carrier 62 with computer program code 64, in the form of a CD ROM disc, is schematically shown in fig. 9.

From the foregoing discussion it is evident that the present invention can be varied in a number of different ways.

For instance, three different ways of controlling the phase legs connected to the healthy phases were described above. It should be realized that it is possible to implement only one of them. It is for instance possible to only implement AC voltage reference adjustment, phase current reduction or circulating current injection. It is also possible to only have a combination of two of the types of phase leg control such as only use AC voltage reference adjustment together with phase current reduction, only use AC voltage reference adjustment together with circulating current injection or only use phase current reduction with circulating current injection.

Another possible variation is that a phase leg may also comprise half-bridge cells in both the upper and lower phase arms.

It shall consequently be realized that the present invention is only to be limited by the following claims.

**Claims**

1. A modular multilevel converter (14) configured to convert between alternating current (AC) and direct current (DC) and comprising a first and a second DC terminal (DC1, DC2),
   a number of AC terminals (ACA, ACB, ACC) for connection to a number of AC phases of an AC link (16), a number of phase legs (PL1, PL2, PL3), one for each phase,
   each phase leg being connected between the first and second DC terminals, having a midpoint connected to a corresponding AC terminal and comprising cells (C1p1, ... C5p1, C1n1, ... C5n1, C1p2, ... C5p2, C1n2, ... C5n2, C1p3, ... C5p3, C1n3, ... C5n3) having a bipolar voltage contribution capability, where each cell comprises at least one energy storage element (Ccell) for providing said voltage contribution and cell switches (S1, S2, S3, S4) for controlling the voltage contribution, where at least said first DC terminal is connectable to a DC system (12),
   the modular multilevel converter (14) further comprising a control unit (22) configured to enter a first protective control mode upon the detection of an operational disturbance of the converter,
   **characterised in that** the protective control mode is configured to comprise controlling all the bipolar voltage contribution cells to operate as unipolar voltage contribution cells, and
   if the operational disturbance is identified as a fault on a phase of the AC link, to block the cells of the phase leg connected to said phase for the remainder of the protective mode and to control the cells of the phase legs connected to the healthy phases of the AC link to limit the consequences of the fault.

2. The modular multilevel converter (14) according to claim 1, wherein a current through cells of a phase leg may be above a first current level when the first protective control mode is entered and the control unit (22) is configured to perform the blocking and controlling in respect of the healthy phase legs as long as any current through the cells of a phase leg is below a second higher current protection level.

3. The modular multilevel converter (14) according to claim 2, wherein if the current is detected to be above the second current protection level, the control unit (22) is configured to block cell switches of the modular multilevel converter used for unipolar voltage contribution operation.

4. The modular multilevel converter (14) according to any previous claim, wherein the control unit (22) has at least one AC voltage reference assigned to each phase leg, and the control unit when being configured to control the cells of the phase legs connected to the healthy phases is configured to adjust the AC voltage references assigned to the phase legs.

5. The modular multilevel converter (14) according to any previous claim, wherein the control unit (22) when being configured to control the cells of the phase legs connected to the healthy phases is configured to control the cells to gradually reduce the phase current to zero.

6. The modular multilevel converter (14) according to any previous claim, wherein the control unit (22) when being configured to control the cells of the phase legs connected to the healthy phases is configured to control the cells to inject a current circulating between the phase legs.

7. The modular multilevel converter (14) according to claim 6, wherein the control unit when being configured to control the cells of the phase legs connected to the healthy phases to inject a circulating current is configured to control the cells to inject the current with a predefined frequency and amplitude.

8. The modular multilevel converter (14) according to claim 7, wherein the amplitude is decreased over time.

9. The modular multilevel converter (14) according to any previous claim, wherein the cells having bipolar voltage contribution capability comprise a first string with series connected switches (S1, S2) and a second string with series connected switches (S3, S4), which strings are both connected in parallel with the energy storage element (Ccell) and the control unit (22), when being configured to control all the bipolar voltage contribution cells to operate as unipolar voltage contribution cells is configured to control the switches of one string to achieve the unipolar voltage contribution operation, while allowing the switches of the other string to be controlled with an AC voltage reference.

10. The modular multilevel converter (14) according to any previous claim, wherein the control unit (22), when operating in the first protective control mode and upon an AC circuit breaker (18) connected to the AC link (16) being opened is configured to leave the first protective control mode and block all the switches of the converter (14).

11. A method of controlling fault handling in a modular multilevel converter (14) converting between alternating current (AC) and direct current (DC), the converter comprising a first and a second DC terminal (DC1, DC2), a number of AC terminals (ACA, ACB, ACC), each connected to a corresponding AC phase of an AC link (16) and a number of phase legs (PL1, PL2, PL3), one for each phase of the AC link, where each phase leg is connected between the first and second DC terminals has a midpoint connected to a corresponding AC terminal and comprises cells (C1p1, ... C5p1, C1n1, ... C5n1, C1p2, ... C5p2, C1n2, ... C5n2, C1p3, ... C5p3, C1n3, ... C5n3) having a bipolar voltage contribution capability, where each cell comprises at least one energy storage element (Ccell) for providing said voltage contribution and cell switches (S1, S2, S3, S4) for controlling the voltage contribution, the method being performed in a control unit of the converter comprising entering (34) a first protective control mode upon the detection of an operational disturbance of the converter, the first protective control mode comprising

controlling (36) all the bipolar voltage contribution cells to operate as unipolar voltage contribution cells, and
upon (38) the operational disturbance being identified as caused by a fault on a phase of the AC link further performing for the remainder of the first protective control mode:

blocking (54) the cells of the phase leg connected to said faulty phase, and
controlling (56, 58, 60) the cells of the phase legs connected to the healthy phases of the AC link to limit the consequences of the fault.

12. The method according to claim 11, wherein a current through cells of a phase leg may be above a first current level when the first protective control mode is entered and the blocking (54) and controlling (56, 58, 60) performed for cells connected to healthy phases is performed as long as any current through the cells of a phase leg is below a second higher current protection level.

13. The method according to claim 12, further comprising blocking (44) cell switches of the modular multilevel converter used for unipolar voltage contribution operation if (42) the current is detected to be above the second higher current protection level.

14. The method according to any of claims 11 - 13, wherein there is at least one AC voltage reference assigned to each phase leg and the controlling of the cells of the phase legs connected to the healthy phases comprises adjusting (56) the AC voltage references assigned to the phase legs .

15. The method according to any of claims 11 - 14, wherein the controlling of the cells of the phase legs connected to the healthy phases comprises controlling (58) the cells to gradually reduce the phase current to zero.

16. The method according to any of claims 11 - 15, wherein the controlling of the cells of the phase legs connected to the healthy phases comprises controlling (60) the cells to inject a current circulating between the phase legs.

17. The method according to any of claims 11 - 16, wherein the cells having bipolar voltage contribution capability comprises a first string with series connected switches (S1, S2) and a second string with series connected switches (S3, S4), which strings are both connected in parallel with the energy storage element (Ccell) and the controlling (36) of all the bipolar voltage contribution cells to operate as unipolar voltage contribution cells comprises controlling the switches of one string to achieve the unipolar voltage contribution operation, while allowing the switches of the other string to be controlled with an AC voltage reference.

**18.** A computer program product for controlling fault handling in a modular multilevel converter (14) converting between alternating current (AC) and direct current (DC), the converter comprising a first and a second DC terminal (DC1, DC2), a number of AC terminals (ACA, ACB, ACC), each connected to a corresponding AC phase of an AC link (16), a number of phase legs (PL1, PL2, PL3), one for each phase of the AC link, where each phase leg is connected between the first and second DC terminals, has a midpoint connected to a corresponding AC terminal and comprises cells (C1p1, ... C5p1, C1n1, ... C5n1, C1p2, ... C5p2, C1n2, ... C5n2, C1p3, ... C5p3, C1n3, ... C5n3) having a bipolar voltage contribution capability, where each cell comprises at least one energy storage element (Ccell) for providing said voltage contribution and cell switches (S1, S2, S3, S4) for controlling the voltage contribution, said computer program product being provided on a data carrier (62) comprising computer program code (64) configured to cause a control unit (22) for the modular multilevel converter (14) to, when said computer program code is loaded into the control unit (22) enter a first protective control mode upon the detection of an operational disturbance of the converter, the first protective control mode comprising controlling all the bipolar voltage contribution cells to operate as unipolar voltage contribution cells, and if the operational disturbance is identified as caused by a fault on a phase of the AC link further perform for the remainder of the first protective control mode:

> blocking the cells in the phase leg connected to said faulty phase, and
> controlling the cells of the phase legs connected to the healthy phases of the AC link to limit the consequences of the fault.

**Patentansprüche**

**1.** Modularer mehrstufiger Umsetzer (14), der konfiguriert ist, zwischen Wechselstrom (AC) und Gleichstrom (DC) umzusetzen, und einen ersten und einen zweiten DC-Anschluss (DC1, DC2), mehrere AC-Anschlüsse (ACA, ACB, ACC) für die Verbindung mit mehreren AC-Phasen einer AC-Verbindungsstrecke (16), mehrere Phasenzweige (PL1, PL2, PL3), einen für jede Phase, umfasst, wobei jeder Phasenzweig zwischen den ersten und den zweiten DC-Anschluss geschaltet ist, an einem Mittelpunkt mit einem entsprechenden AC-Anschluss verbunden ist und Zellen (C1p1, ..., C5p1, C1n1, ..., C5n1, C1p2, ..., C5p2, C1n2, ..., C5n2, C1p3, ..., C5p3, C1n3, ..., C5n3) mit einer Bipolarspannungsbeitragsfähigkeit enthält, wobei jede Zelle wenigstens ein Energiespeicherelement (Ccell) für die Bereitstellung des Spannungsbeitrags und Zellenschalter (S1, S2, S3, S4) zum Steuern des Spannungsbeitrags enthält, wobei wenigstens der erste DC-Anschluss mit einem DC-System (12) verbunden werden kann, wobei der modulare mehrstufige Umsetzer (14) ferner eine Steuereinheit (22) umfasst, die konfiguriert ist, bei Detektion einer Betriebsstörung des Umsetzers in eine erste Schutzsteuerbetriebsart einzutreten, **dadurch gekennzeichnet, dass** die Schutzsteuerbetriebsart so konfiguriert ist, dass sie Folgendes umfasst:

> Steuern sämtlicher Bipolarspannungsbeitrags-Zellen, damit sie als Unipolarspannungsbeitrags-Zellen arbeiten, und
> falls die Betriebsstörung als ein Fehler in einer Phase der AC-Verbindungsstrecke identifiziert wird, Blockieren der Zellen des Phasenzweigs, die mit dieser Phase verbunden sind, für den Rest der Schutzbetriebsart und Steuern der Zellen der Phasenzweige, die mit den funktionsfähigen Phasen der AC-Verbindungsstrecke verbunden sind, in der Weise, dass die Konsequenzen des Fehlers begrenzt werden.

**2.** Modularer mehrstufiger Umsetzer (14) nach Anspruch 1, wobei ein Strom durch Zellen eines Phasenzweigs über einem ersten Strompegel liegen kann, wenn in die erste Schutzsteuerbetriebsart eingetreten wird, und die Steuereinheit (22) konfiguriert ist, das Blockieren und Steuern in Bezug auf die funktionsfähigen Phasenzweige so lange auszuführen, wie irgendein Strom durch die Zellen eines Phasenzweigs unter einem zweiten, höheren Stromschutzpegel liegt.

**3.** Modularer mehrstufiger Umsetzer (14) nach Anspruch 2, wobei dann, wenn detektiert wird, dass der Strom über dem zweiten Stromschutzpegel liegt, die Steuereinheit (22) konfiguriert ist, Zellenschalter des modularen mehrstufigen Umsetzers, die für den Unipolarspannungsbeitrags-Betrieb verwendet werden, zu blockieren.

**4.** Modularer mehrstufiger Umsetzer (14) nach einem vorhergehenden Anspruch, wobei die Steuereinheit (22) wenigstens eine AC-Spannungsreferenz besitzt, die jedem Phasenzweig zugewiesen ist, und die Steuereinheit dann, wenn sie konfiguriert ist, die Zellen der mit den funktionsfähigen Phasen verbundenen Phasenzweige zu steuern, konfiguriert ist, die AC-Spannungsreferenzen, die den Phasenzweigen zugewiesen sind, einzustellen.

**5.** Modularer mehrstufiger Umsetzer (14) nach einem vorhergehenden Anspruch, wobei die Steuereinheit (22) dann, wenn sie konfiguriert ist, die Zellen der mit den funktionsfähigen Phasen verbundenen Phasenzweige zu steuern, konfiguriert ist, die Zellen so zu steuern, dass sie den Phasenstrom allmählich auf null verringern.

6. Modularer mehrstufiger Umsetzer (14) nach einem vorhergehenden Anspruch, wobei die Steuereinheit (22) dann, wenn sie konfiguriert ist, die Zellen der mit den funktionsfähigen Phasen verbundenen Phasenzweige zu steuern, konfiguriert ist, die Zellen so zu steuern, dass sie einen zwischen den Phasenzweigen zirkulierenden Strom einleiten.

7. Modularer mehrstufiger Umsetzer (14) nach Anspruch 6, wobei die Steuereinheit dann, wenn sie konfiguriert ist, die Zellen der mit den funktionsfähigen Phasen verbundenen Phasenzweige zu steuern, um einen zirkulierenden Strom einzuleiten, konfiguriert ist, die Zellen so zu steuern, dass sie den Strom mit im Voraus definierter Frequenz und Amplitude einleiten.

8. Modularer mehrstufiger Umsetzer (14) nach Anspruch 7, wobei die Amplitude im Lauf der Zeit verringert wird.

9. Modularer mehrstufiger Umsetzer (14) nach einem vorhergehenden Anspruch, wobei die Zellen, die eine Bipolarspannungsbeitragsfähigkeit haben, einen ersten Strang mit in Reihe geschalteten Schaltern (S1, S2) und einen zweiten Strang mit in Reihe geschalteten Schaltern (S3, S4) umfassen, wobei beide Stränge zu dem Energiespeicherelement (Ccell) parallel geschaltet sind, und wobei die Steuereinheit (22) dann, wenn sie konfiguriert ist, sämtliche Bipolarspannungsbeitrags-Zellen so zu steuern, dass sie als Unipolarspannungsbeitrags-Zellen arbeiten, konfiguriert ist, die Schalter eines Strangs zu steuern, um den Unipolarspannungsbeitragsbetrieb zu erzielen, während zugelassen wird, dass die Schalter des anderen Strangs mit einer AC-Spannungsreferenz gesteuert werden.

10. Modularer mehrstufiger Umsetzer (14) nach einem vorhergehenden Anspruch, wobei die Steuereinheit (22), während sie in der ersten Schutzsteuerbetriebsart arbeitet, und dann, wenn ein AC-Schaltungsunterbrecher (18), der mit der AC-Verbindungsstrecke (16) verbunden ist, geöffnet wird, konfiguriert ist, die erste Schutzsteuerbetriebsart zu verlassen und sämtliche Schalter des Umsetzers (14) zu blockieren.

11. Verfahren zum Steuern einer Fehlerhandhabung in einem modularen mehrstufigen Umsetzer (14), der zwischen Wechselstrom (AC) und Gleichstrom (DC) umsetzt, wobei der Umsetzer einen ersten und einen zweiten DC-Anschluss (DC1, DC2), mehrere AC-Anschlüsse (ACA, ACB, ACC), wovon jeder mit einer entsprechenden AC-Phase einer AC-Verbindungsstrecke (16) verbunden ist, und mehrere Phasenzweige (PL1, PL2, PL3), eine für jede Phase der AC-Verbindungsstrecke, umfasst, wobei jeder Phasenzweig, der zwischen dem ersten und dem zweiten DC-Anschluss verbunden ist, einen Mittelpunkt besitzt, der mit einem entsprechenden AC-Anschluss verbunden ist, und Zellen (C1p1, ..., C5p1, C1n1, ..., C5n1, C1p2, ..., C5p2, C1n2, ..., C5n2, C1p3, ..., C5p3, C1n3, ..., C5n3) enthält, die eine Bipolarspannungsbeitragsfähigkeit haben, wobei jede Zelle wenigstens ein Energiespeicherelement (Ccell) für die Bereitstellung des Spannungsbeitrags und Zellenschalter (S1, S2, S3, S4) zum Steuern des Spannungsbeitrags enthält, wobei das Verfahren, das in einer Steuereinheit des Umsetzers ausgeführt wird, Folgendes umfasst:
Eintreten (34) in eine erste Schutzsteuerbetriebsart bei Detektion einer Betriebsstörung des Umsetzers, wobei die erste Schutzsteuerbetriebsart Folgendes umfasst:

Steuern (36) sämtlicher Bipolarspannungsbeitragszellen, damit sie als Unipolarspannungsbeitragszellen arbeiten, und
dann, wenn die Betriebsstörung als durch einen Fehler in einer Phase der AC-Verbindungsstrecke verursacht identifiziert wird (38), Ausführen für den Rest der ersten Schutzsteuerbetriebsart:
Blockieren (54) der Zellen des mit der fehlerhaften Phase verbundenen Phasenzweigs, und Steuern (56, 58, 60) der Zellen der Phasenzweige, die mit den funktionsfähigen Phasen der AC-Verbindungsstrecke verbunden sind, um die Folgen des Fehlers zu begrenzen.

12. Verfahren nach Anspruch 11, wobei ein Strom durch Zellen eines Phasenzweigs über einen ersten Strompegel liegen kann, wenn in die erste Schutzsteuerbetriebsart eingetreten wird, und das Blockieren (54) und das Steuern (56, 58, 60), das für mit funktionsfähigen Phasen verbundene Zellen ausgeführt wird, solange ausgeführt werden, wie irgendein Strom durch die Zellen eines Phasenzweigs unter einem zweiten, höheren Stromschutzpegel liegt.

13. Verfahren nach Anspruch 12, das ferner das Blockieren (44) von Zellenschaltern des modularen mehrstufigen Umsetzers, die für einen Unipolarspannungsbeitragsbetrieb verwendet werden, umfasst, falls detektiert wird (42), dass der Strom über dem zweiten, höheren Stromschutzpegel liegt.

14. Verfahren nach einem der Ansprüche 11-13, wobei mindestens eine AC-Spannungsreferenz, die jedem Phasenzweig zugewiesen ist, vorhanden ist und das Steuern der Zellen der mit den funktionsfähigen Phasen verbundenen Phasenzweig das Einstellen (56) der AC-Spannungsreferenzen, die den Phasenzweigen zugewiesen sind, umfasst.

15. Verfahren nach einem der Ansprüche 11-14, wobei das Steuern der Zellen der mit den funktionsfähigen Phasen verbundenen Phasenzweigen das Steuern (58) der Zellen, um den Phasenstrom allmählich auf null zu verringern, umfasst.

16. Verfahren nach einem der Ansprüche 11-15, wobei das Steuern der Zellen der mit den funktionsfähigen Phasen verbundenen Phasenzweige das Steuern (60) der Zellen in der Weise, dass ein zwischen den Phasenzweigen zirkulierender Strom eingeleitet wird, umfasst.

17. Verfahren nach einem der Ansprüche 11-16, wobei die Zellen, die die Bipolarspannungsbeitragsfähigkeit haben, einen ersten Strang mit in Reihe geschalteten Schaltern (S1, S2) und einen zweiten Strang mit in Reihe geschalteten Schaltern (S3, S4) umfassen, wobei beide Stränge zu dem Energiespeicherelement (Ccell) parallel geschaltet sind und wobei das Steuern (36) sämtlicher Bipolarspannungsbeitragszellen, damit sie als Unipolarspannungsbeitragszellen arbeiten, das Steuern der Schalter eines Strangs, um den Unipolarspannungsbeitragsbetrieb zu erzielen, umfasst, während zugelassen wird, dass die Schalter des anderen Strangs mit einer AC-Spannungsreferenz gesteuert werden.

18. Computerprogrammprodukt zum Steuern einer Fehlerhandhabung in einem modularen mehrstufigen Umsetzer (14), der zwischen Wechselstrom (AC) und Gleichstrom (DC) umsetzt, wobei der Umsetzer einen ersten und einen zweiten DC-Anschluss (DC1, DC2), mehrere AC-Anschlüsse (ACA, ACB, ACC), wovon jeder mit einer entsprechenden AC-Phase einer AC-Verbindungsstrecke (16) verbunden ist, und mehrere Phasenzweige (PL1, PL2, PL3), einen für jede Phase der AC-Verbindungsstrecke, umfasst, wobei jeder Phasenzweig zwischen den ersten und den zweiten DC-Anschluss geschaltet ist, einen Mittelpunkt besitzt, der mit einem entsprechenden AC-Anschluss verbunden ist, und Zellen (C1p1, ..., C5p1, C1n1, ..., C5n1, C1p2, ..., C5p2, C1n2, ..., C5n2, C1p3, ..., C5p3, C1n3, ..., C5n3) umfasst, die eine Bipolarspannungsbeitragsfähigkeit haben, wobei jede Zelle wenigstens ein Energiespeicherelement (Ccell), um den Spannungsbeitrag bereitzustellen, und Zellenschalter (S1, S2, S3, S4) zum Steuern des Spannungsbeitrags enthält, wobei das Computerprogrammprodukt auf einem Datenträger (62) bereitgestellt ist, der Computerprogrammcode (64) enthält, der konfiguriert ist, eine Steuereinheit (22) für den modularen mehrstufigen Umsetzer (14) zu veranlassen, dann, wenn der Computerprogrammcode in die Steuereinheit (22) geladen ist, in eine erste Schutzsteuerbetriebsart einzutreten, wenn eine Betriebsstörung des Umsetzers detektiert wird, wobei die erste Schutzsteuerbetriebsart Folgendes umfasst:

Steuern sämtlicher Bipolarspannungsbeitragszellen, damit sie als Unipolarspannungsbeitragszellen arbeiten, und ferner, falls die Betriebsstörung als durch ein Fehler in einer Phase der AC-Verbindungsstrecke verursacht identifiziert wird, Ausführen für den Rest der ersten Schutzsteuerbetriebsart:

Blockieren der Zellen in dem mit der fehlerhaften Phase verbundenen Phasenzweig und Steuern der Zellen der mit den funktionsfähigen Phasen der AC-Verbindungsstrecke verbundenen Phasenzweige, um die Folgen des Fehlers zu begrenzen.

## Revendications

1. Convertisseur multiniveau modulaire (14) configuré pour réaliser une conversion entre un courant alternatif (CA) et un courant continu (CC) et comprenant une première et une deuxième borne CC (DC1, DC2), un certain nombre de bornes CA (ACA, ACB, ACC) pour un branchement à un certain nombre de phases CA d'un maillon CA (16), un certain nombre de jambes de phase (PL1, PL2, PL3), une pour chaque phase, chaque jambe de phase étant branchée entre les première et deuxième bornes CC, ayant un point central branché à une borne CA correspondante et comprenant des cellules (C1p1, ..., C5p1, C1n1, ..., C5n1, C1p2, ..., C5p2, C1n2, ..., C5n2, C1p3, ..., C5p3, C1n3, ..., C5n3) ayant une capacité de contribution à la tension bipolaire, chaque cellule comprenant au moins un élément de stockage d'énergie (Ccell) destiné à fournir ladite contribution à la tension et des commutateurs de cellule (S1, S2, S3, S4) destinés à contrôler la contribution à la tension, où au moins ladite première borne CC est branchable à un système CC (12), le convertisseur multiniveau modulaire (14) comprenant en outre une unité de contrôle (22) configurée pour entrer dans un premier mode de contrôle protecteur lors de la détection d'une perturbation opérationnelle du convertisseur, **caractérisé en ce que** le mode de contrôle protecteur est configuré pour comprendre le contrôle de toutes les cellules de contribution à la tension bipolaire pour qu'elles fonctionnent comme des cellules de contribution à la tension unipolaire, et

si la perturbation opérationnelle est identifiée comme un défaut sur une phase du maillon CA, pour bloquer les cellules de la jambe de phase branchée à ladite phase pour le reste du mode protecteur et pour contrôler les cellules des jambes de phase branchées aux phases saines du maillon CA pour limiter les conséquences du défaut.

2. Convertisseur multiniveau modulaire (14) selon la revendication 1, dans lequel un courant à travers des cellules d'une jambe de phase peut être supérieur à un premier niveau de courant quand on entre dans le premier mode de contrôle protecteur et l'unité de contrôle (22) est configurée pour réaliser le blocage et le contrôle par rapport aux jambes de phase saines tant qu'aucun courant à travers les cellules d'une jambe de phase n'est inférieur à un deuxième niveau de protection de courant supérieur.

3. Convertisseur multiniveau modulaire (14) selon la revendication 2 dans lequel, s'il est détecté que le courant est supérieur au deuxième niveau de protection de courant, l'unité de contrôle (22) est configurée pour bloquer des commutateurs de cellule du convertisseur multiniveau modulaire utilisés pour l'opération de contribution à la tension unipolaire.

4. Convertisseur multiniveau modulaire (14) selon une quelconque revendication précédente, dans lequel l'unité de contrôle (22) a au moins une référence de tension CA attribuée à chaque jambe de phase, et l'unité de contrôle, lorsqu'elle est configurée pour contrôler les cellules des jambes de phase branchées aux phases saines, est configurée pour régler les références de tension CA attribuées aux jambes de phase.

5. Convertisseur multiniveau modulaire (14) selon une quelconque revendication précédente, dans lequel l'unité de contrôle (22), lorsqu'elle est configurée pour contrôler les cellules des jambes de phase branchées aux phases saines, est configurée pour contrôler les cellules pour qu'elles réduisent progressivement le courant de phase à zéro.

6. Convertisseur multiniveau modulaire (14) selon une quelconque revendication précédente, dans lequel l'unité de contrôle (22), lorsqu'elle est configurée pour contrôler les cellules des jambes de phase branchées aux phases saines, est configurée pour contrôler les cellules pour qu'elles injectent un courant circulant entre les jambes de phase.

7. Convertisseur multiniveau modulaire (14) selon la revendication 6, dans lequel l'unité de contrôle, lorsqu'elle est configurée pour contrôler les cellules des jambes de phase branchées aux phases saines pour qu'elles injectent un courant circulant, est configurée pour contrôler les cellules pour qu'elles injectent le courant avec une fréquence et une amplitude prédéfinies.

8. Convertisseur multiniveau modulaire (14) selon la revendication 7, dans lequel l'amplitude est diminuée au fil du temps.

9. Convertisseur multiniveau modulaire (14) selon une quelconque revendication précédente, dans lequel les cellules ayant une capacité de contribution à la tension bipolaire comprennent une première chaîne avec des commutateurs branchés en série (S1, S2) et une deuxième chaîne avec des commutateurs branchés en série (S3, S4), lesquelles chaînes sont toutes deux branchées en parallèle à l'élément de stockage d'énergie (Ccell), et l'unité de contrôle (22), lorsqu'elle est configurée pour contrôler toutes les cellules de contribution à la tension bipolaire pour qu'elles fonctionnent comme des cellules de contribution à la tension unipolaire, est configurée pour contrôler les commutateurs d'une chaîne pour qu'ils réalisent l'opération de contribution à la tension unipolaire, tout en permettant aux commutateurs de l'autre chaîne d'être contrôlés avec une référence de tension CA.

10. Convertisseur multiniveau modulaire (14) selon une quelconque revendication précédente, dans lequel l'unité de contrôle (22), lorsqu'elle fonctionne dans le premier mode de contrôle protecteur et lors de l'ouverture d'un disjoncteur CA (18) branché au maillon CA (16), est configurée pour quitter le premier mode de contrôle protecteur et bloquer tous les commutateurs du convertisseur (14).

11. Procédé de contrôle de la gestion des défauts dans un convertisseur multiniveau modulaire (14) réalisant une conversion entre un courant alternatif (CA) et un courant continu (CC), le convertisseur comprenant une première et une deuxième borne CC (DC1, DC2), un certain nombre de bornes CA (ACA, ACB, ACC), chacune branchée à une phase CA correspondante d'un maillon CA (16), et un certain nombre de jambes de phase (PL1, PL2, PL3), une pour chaque phase du maillon CA, chaque jambe de phase étant branchée entre les première et deuxième bornes CC, ayant un point central branché à une borne CA correspondante et comprenant des cellules (C1p1, ..., C5p1, C1n1, ..., C5n1, C1p2, ..., C5p2, C1n2, ..., C5n2, C1p3, ..., C5p3, C1n3, ..., C5n3) ayant une capacité de contribution à la tension bipolaire, chaque cellule comprenant au moins un élément de stockage d'énergie (Ccell) destiné à fournir ladite contribution à la tension et des commutateurs de cellule (S1, S2, S3, S4) destinés à contrôler la contribution à la tension, le procédé, réalisé dans une unité de contrôle du convertisseur, comprenant l'entrée (34) dans un premier mode de contrôle protecteur lors de la détection d'une perturbation opérationnelle du convertisseur, le premier mode de contrôle protecteur comprenant

le contrôle (36) de toutes les cellules de contribution à la tension bipolaire pour qu'elles fonctionnent comme des cellules de contribution à la tension unipolaire, et

lorsque (38) la perturbation opérationnelle est identifiée comme provoquée par un défaut sur une phase du maillon CA, également la réalisation, pour le reste du premier mode de contrôle protecteur :

du blocage (54) des cellules de la jambe de phase branchée à ladite phase défectueuse, et
du contrôle (56, 58, 60) des cellules des jambes de phase branchées aux phases saines du maillon CA pour limiter les conséquences du défaut.

12. Procédé selon la revendication 11, dans lequel un courant à travers des cellules d'une jambe de phase peut être supérieur à un premier niveau de courant quand on entre dans le premier mode de contrôle protecteur et le blocage (54) et le contrôle (56, 58, 60) réalisés pour des cellules branchées aux phases saines sont réalisés tant qu'aucun courant à travers les cellules d'une jambe de phase n'est inférieur à un deuxième niveau de protection de courant supérieur.

13. Procédé selon la revendication 12, comprenant en outre le blocage (44) de commutateurs de cellule du convertisseur multiniveau modulaire utilisés pour l'opération de contribution à la tension unipolaire si (42) il est détecté que le courant est supérieur au deuxième niveau de protection de courant supérieur.

14. Procédé selon l'une quelconque des revendications 11 à 13, dans lequel il y a au moins une référence de tension CA attribuée à chaque jambe de phase, et le contrôle des cellules des jambes de phase branchées aux phases saines comprend le réglage (56) des références de tension CA attribuées aux jambes de phase.

15. Procédé selon l'une quelconque des revendications 11 à 14, dans lequel le contrôle des cellules des jambes de phase branchées aux phases saines comprend le contrôle (58) des cellules pour qu'elles réduisent progressivement le courant de phase à zéro.

16. Procédé selon l'une quelconque des revendications 11 à 15, dans lequel le contrôle des cellules des jambes de phase branchées aux phases saines comprend le contrôle (60) des cellules pour qu'elles injectent un courant circulant entre les jambes de phase.

17. Procédé selon l'une quelconque des revendications 11 à 16, dans lequel les cellules ayant une capacité de contribution à la tension bipolaire comprennent une première chaîne avec des commutateurs branchés en série (S1, S2) et une deuxième chaîne avec des commutateurs branchés en série (S3, S4), lesquelles chaînes sont toutes deux branchées en parallèle à l'élément de stockage d'énergie (Ccell), et le contrôle (36) de toutes les cellules de contribution à la tension bipolaire pour qu'elles fonctionnent comme des cellules de contribution à la tension unipolaire comprend le contrôle des commutateurs d'une chaîne pour qu'ils réalisent l'opération de contribution à la tension unipolaire, tout en permettant aux commutateurs de l'autre chaîne d'être contrôlés avec une référence de tension CA.

18. Produit-programme informatique destiné à contrôler la gestion des défauts dans un convertisseur multiniveau modulaire (14) réalisant une conversion entre un courant alternatif (CA) et un courant continu (CC), le convertisseur comprenant une première et une deuxième borne CC (DC1, DC2), un certain nombre de bornes CA (ACA, ACB, ACC), chacune branchée à une phase CA correspondante d'un maillon CA (16), un certain nombre de jambes de phase (PL1, PL2, PL3), une pour chaque phase du maillon CA, chaque jambe de phase étant branchée entre les première et deuxième bornes CC, ayant un point central branché à une borne CA correspondante et comprenant des cellules (C1p1, ..., C5p1, C1n1, ..., C5n1, C1p2, ..., C5p2, C1n2, ..., C5n2, C1p3, ..., C5p3, C1n3, ..., C5n3) ayant une capacité de contribution à la tension bipolaire, chaque cellule comprenant au moins un élément de stockage d'énergie (Ccell) destiné à fournir ladite contribution à la tension et des commutateurs de cellule (S1, S2, S3, S4) destinés à contrôler la contribution à la tension, ledit produit-programme informatique étant disposé sur un support de données (62) comprenant un code de programme informatique (64) configuré pour conduire une unité de contrôle (22) du convertisseur multiniveau modulaire (14) à, quand ledit code de programme informatique est chargé dans l'unité de contrôle (22),

entrer dans un premier mode de contrôle protecteur lors de la détection d'une perturbation opérationnelle du convertisseur, le premier mode de contrôle protecteur comprenant le contrôle de toutes les cellules de contribution à la tension bipolaire pour qu'elles fonctionnent comme des cellules de contribution à la tension unipolaire, et

si la perturbation opérationnelle est identifiée comme provoquée par un défaut sur une phase du maillon CA, réaliser également, pour le reste du premier mode de contrôle protecteur :

le blocage des cellules dans la jambe de phase branchée à ladite phase défectueuse, et

le contrôle des cellules des jambes de phase branchées aux phases saines du maillon CA pour limiter les conséquences du défaut.

FIG. 1

FIG. 3

FIG. 2

FIG. 4

FIG. 5

FIG. 6

```
┌─────────────────────────────────────────────┐
│        ENTER FIRST PROTECTIVE MODE           │──── 34
└─────────────────────────────────────────────┘
                      │
                      ▼
┌─────────────────────────────────────────────┐
│     CONTROL CELLS AS HALF-BRIDGE CELLS       │──── 36
└─────────────────────────────────────────────┘
```

FIG. 7

BLOCK CELLS CONNECTED TO FAULTY PHASE — 54

ADJUST AC REFERENCE VOLTAGES — 56

REDUCE PHASE CURENTS TO ZERO — 58

INJECT CIRCULATING CURRENT — 60

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015110185 A
- EP 2858227 A1

- WO 2013000513 A1